# EUROPÄISCHE PATENTSCHRIFT

(11) **EP 0 732 869 B1**
(45) Veröffentlichungstag und Bekanntmachung des Hinweises auf die Patenterteilung: **04.07.2001**
(21) Anmeldenummer: 96103407.1
(22) Anmeldetag: 05.03.1996
(51) Int. Cl.: H05B 41/295, H05B 41/38

(54) **Verfahren und Schaltungsanordnung zum Betrieb einer Entladungslampe**
Process and circuit for operating a discharge lamp
Procédé et circuit pour alimenter une lampe à décharge

(30) Priorität: 17.03.1995 DE 19509832
(43) Veröffentlichungstag der Anmeldung: 18.09.1996
(73) Patentinhaber: Patent-Treuhand-Gesellschaft für elektrische Glühlampen mbH, 81543 München (DE)
(72) Erfinder: Osterried, Josef, 85521 Ottobrunn (DE); Huber, Andreas, 82216 Maisach (DE); Veser, Alwin, 80803 München (DE); Hansmann, Frank, 30890 Barsinghausen (DE)

(56) Entgegenhaltungen:
- EP-A- 0 411 617
- US-A- 4 587 460

## Beschreibung

Die Erfindung betrifft ein Verfahren zum Betrieb einer Entladungslampe nach dem Oberbegriff des Anspruchs 1 sowie eine Schaltungsanordnung zur Durchführung des Verfahrens nach Anspruch 7.

Der Betrieb von Entladungslampen, insbesondere von Hochdruckentladungslampen wird im Stand der Technik (z.B. elektronisches Vorschaltgerät der Firma Philips mit der Produktbezeichnung EMC 35 bzw. EMC 70) dadurch gestartet, daß der Lampe bereits im Anlaufbetrieb eine Wechselspannung mit der Nennfrequenz, beispielsweise 90-150 Hz zugeführt wird. Dieser Wechselspannung werden Zündimpulse überlagert. Spätestens nach einer halben Periode der Nennfrequenz werden die Lampenspannung und der Lampenstrom umgepolt. Bei einer Nennfrequenz von 90 Hz erfolgt die Umpolung nach 5,5 ms. Zu diesem Zeitpunkt haben die Elektroden eine Temperatur, die eine thermische Emission von Elektroden nicht erlaubt. Bei der genannten Umpolung der Lampenspannung und des Lampenstroms neigt die Lampe dazu, wieder auszugehen oder aber sie brennt für einige Millisekunden mit einer relativ hohen Brennspannung von etwa 150-250 V in einer Glimmentladung.

Eine Glimmentladung ist mit mehreren Nachteilen verbunden. Zum einen führt eine Glimmentladung zu einem erheblichen Materialabtrag von der jeweiligen Kathode. Zum anderen führt der durch die Glimmentladung bewirkte Materialabtrag zu einer Schwärzung des Lampenkolbens. Darüber hinaus bewirkt diese Schwärzung einen Lichtstromabfall. Diese unerwünschten Wirkungen einer Glimmentladung treten bei jedem Umpolvorgang auf, solange die Elektroden noch nicht ihre Emmissionstemperatur erreicht haben.

Ausgehend von diesem Stand der Technik liegt der Erfindung die Aufgabe zugrunde, ein Verfahren der eingangs genannten Art und eine entsprechende Schaltungsanordnung anzugeben, die eine Inbetriebnahme einer Entladungslampe ermöglichen, bei welcher die Wahrscheinlichkeit für das Auftreten von Glimmentladungen vermindert wird bzw. bei welcher die Zeiträume, in denen Glimmentladungen auftreten, verkürzt werden.

Diese Aufgabe wird erfindungsgemäß mit einem Verfahren nach Anspruch 1 und mit einer Schaltungsanordnung nach Anspruch 7 gelöst.

Das erfindungsgemäße Verfahren und die erfindungsgemäße Schaltungsanordnung sind mit mehreren Vorteilen verbunden. Die Wahrscheinlichkeit für das Auftreten von Glimmentladungen wird vermindert. Bei optimaler Dimensionierung der Schaltungsanordnung bzw. bei optimaler Vorgabe der verschiedenen Zeiträume (T2, T3) während des Anlaufbetriebszeitraums können Glimmentladungen sogar ganz unterbunden werden. Damit wird zum einen die Lebensdauer von Entladungslampen erhöht, da der mit Glimmentladungen verbundene Materialabtrag vermindert bzw. ganz abgestellt wird. Zum anderen wird auch eine Schwärzung des Lampenkolbens vermindert bzw. ganz unterbunden.

Die Erfindung wird nun anhand der Zeichnungen beschrieben. Es zeigt
- Fig. 1: ein Zeitdiagramm für die im Stand der Technik beim Starten einer Hochdruckentladungslampe zugeführte Spannung bzw. den zugeführten Strom;
- Fig. 2 und Fig. 3: Zeitdiagramme für die erfindungsgemäß beim Starten einer Hochdruckentladungslampe zugeführte Spannung bzw. den zugeführten Strom; und
- Fig. 4: eine Schaltungsanordnung zur Durchführung des erfindungsgemäßen Verfahrens.

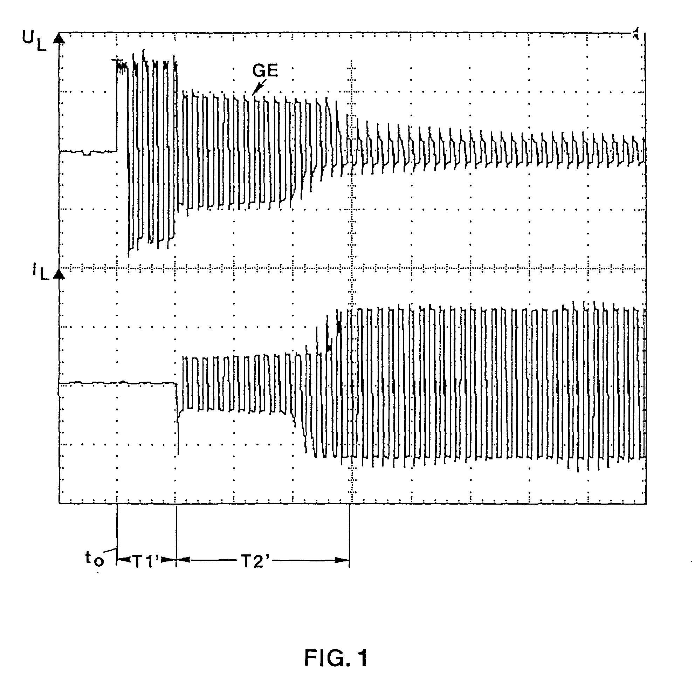

Entladungslampen, insbesondere Hochdruckentladungslampen, wird im Stand der Technik bereits zu Betriebsbeginn (Zeitpunkt tₒ) eine Wechselspannung mit der Nennfrequenz zugeführt. Dies ist in Fig. 1 schematisch dargestellt, wobei im oberen Teil der Figur 1 die Lampenspannung U_{L} (mit 200 V/Einheit) und im unteren Teil der Figur 1 der Lampenstrom I_{L} (mit 2A/Einheit) dargestellt ist. In dieser Betriebsweise nach dem Stand der Technik, wird der Lampe vom Zeitpunkt (tₒ) des Einschaltens eine Spannung U_{L} mit der Nennfrequenz zugeführt. Dieser sind in einem Zeitraum T1' Zündimpulse überlagert. Die Zündimpulse haben eine Amplitude von 4 bis 4,5 KV und eine Breite von 1- Mikrosekunden, so daß die Zündimpulse in Fig. 1 nicht dargestellt sind (1 Zeitabschnitt in Fig. 1 = 50 Millisekunden). In einem daran anschließenden Zeitraum T2' entstehen bei den Umpolvorgängen der Lampenspannung Glimmentladungen GE, wobei diese Glimmentladungen solange auftreten können, bis die Elektroden ihre Emissionstemperatur erreichen (Ende des Zeitraums T2'). Typische Werte für Glimmentladungen liegen im Bereich von 150 bis 250 Volt. Jede Glimmentladung bewirkt einen Materialabtrag von der jeweiligen Kathode und eine entsprechende Schwärzung des Lampenkolbens.

In Anschluß an den Zeitraum T2' steigt die Lampenspannung von 10 bis 20 Volt bis auf über Nennwert und der Lampenstrom sinkt auf seinen Nennwert. Dieser Zeitraum nach T2' entspricht dem Zeitraum T4 bei dem erfindungsgemäßen Verfahren und dauert ca. 2 Minuten.

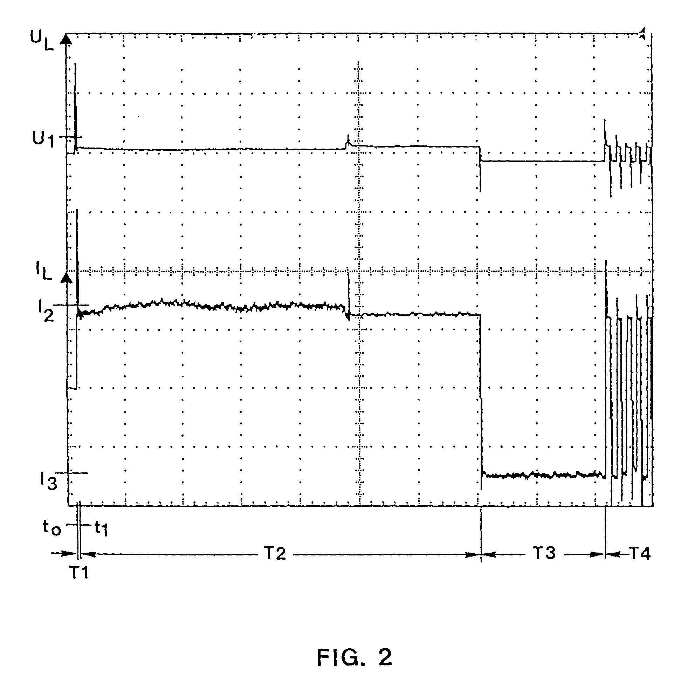

Fig. 2 zeigt schematisch die Spannungs- und Stromzufuhr nach dem erfindungsgemäßen Verfahren, wobei im oberen Teil der Figur 2 die Lampenspannung U_{L} (mit 200 V/Einheit) und im unteren Teil der Figur 1 der Lampenstrom I_{L} (mit 2A/Einheit) dargestellt ist.

Die Schaltungsanordnung zur Durchführung dieses Verfahrens bzw. das betreffende elektronische Vorschaltgerät wird beim Betriebsstart (Zeitpunkt tₒ in Fig. 2) nicht mit einer Wechselspannung bzw. nicht mit der Nennfrequenz betrieben. Vielmehr wird der Anlaufbetriebszeitraum Ta (Ta = T1 + T2 + T3 + T4) in vier unterschiedliche Zeiträume T1 bis T4 unterteilt:

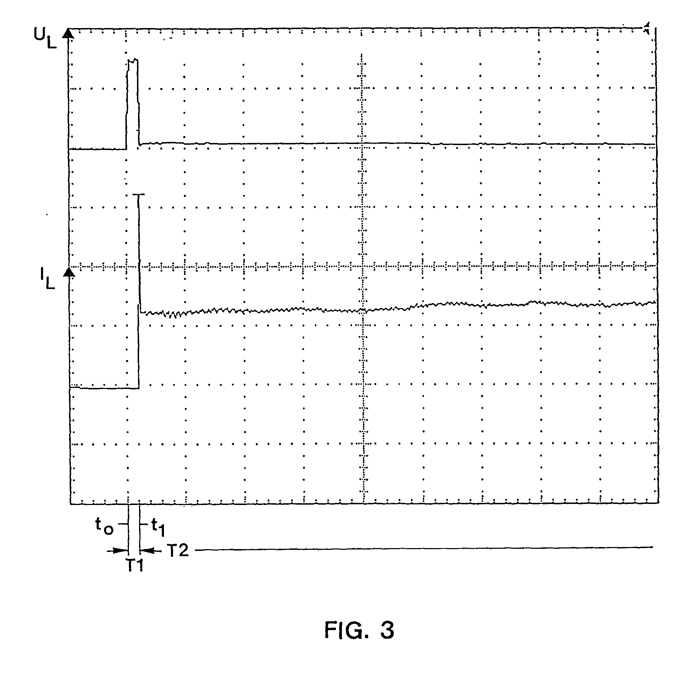

Im Zeitraum T1 wird an die Entladungslampe eine Gleichspannung U₁ mit einer Amplitude von typischerweise 280 bis 350 Volt gelegt. Dieser Gleichspannung U₁ werden solange Zündimpulse überlagert, bis die Lampe durchbricht, d.h. zündet (Zeitpunkt t1). Die Zündimpulse sind aus den Gründen, die in Zusammenhang mit Fig. 1 beschrieben worden sind, nicht in Fig. 2 dargestellt. Im Zeitraum T1 fließt noch kein Lampenstrom. Der Zeitraum T1 dauert z.B. nur 1 ms. Figur 3 zeigt den Zeitraum T1 in vergrößerter Darstellung

Der Zeitraum T2 beginnt mit dem Zünden. Die Entladungslampe wird mit einem Gleichstrom I2 in einer ersten Richtung betrieben. Dabei beträgt die Spannung typischerweise 10 bis 20 Volt. Typischerweise beträgt der Zeitraum T2 300 - 500 ms (in Fig. 2: ca. 350 ms). Der Gleichstrom I2 beträgt typischerweise das 1,5-fache des Nennstroms, also des Stroms im Nennbetriebszustand (im Anschluß an T4), insbesondere das 1,5- bis 2-fache des Nennstroms.

Der Zeitraum T3 beginnt im Anschluß an den Zeitraum T2. Die Entladungslampe wird mit einem Gleichstrom I3 in einer zweiten Richtung betrieben, die der ersten Richtung entgegengesetzt ist. Dabei beträgt die Spannung ebenfalls typischerweise 10 bis 20 Volt. Typischerweise ist T3 kürzer als T2; insbesondere beträgt der Zeitraum T3 100 - 200 ms (in Fig. 2: ca. 110 ms). Der Gleichstrom I3 beträgt ebenfalls typischerweise das 1,5-fache des Nennstroms, also des Stroms im Nennbetriebszustand (im Anschluß an T4), insbesondere das 1,5- bis 2 -fache des Nennstroms.

Erst mit Beginn des Zeitraums T4 wird der Entladungslampe ein Wechselstrom mit der Nennfrequenz eingeprägt, der weiterhin mindestens das 1,5-fache des Nennstroms beträgt. Die Wechselspannung beträgt weiterhin typischerweise 10 bis 20 Volt. Im Zeitraum T4, der nicht vollständig in Figur 2 dargestellt ist, steigt die Lampenspannung von 10 bis 20 Volt auf ihren Nennwert von z.B. 80 bis 100 Volt und der Lampenstrom sinkt auf den Nennwert von z.B. 1,8 A in einer 150-Watt-Lampe. Der Zeitraum T4, der unter anderem von dem Verhältnis von Anlaufstrom zu Nennstrom abhängt (im vorliegenden Fall: Faktor 1,5 bis 2), dauert etwa 1 - 2 Minuten.

Durch den erfindungsgemäßen Betrieb der Lampe mit Gleichstrom in den Zeiträumen T2 und T3 wird vermieden, daß die Lampenspannung und der Lampenstrom in diesen Zeiträumen umgepolt werden, so daß die Wahrscheinlichkeit von Glimmentladungen, die bei Umpolvorgängen auftreten können, vermindert wird.

Der zweite vorgebbare Zeitraum T2 wird so gewählt, daß die Lampenelektrode, welche während dieses Zeitraums T2 Anode ist, auf die Temperatur (z.B. 2000° K) aufgeheizt wird, bei der die thermische Emission von Elektronen einsetzt.

Der dritte vorgebbare Zeitraum T3 wird so gewählt, daß die Lampenelektrode, welche während dieses Zeitraums T3 Anode ist (in T2: Kathode), auf die Temperatur (z.B. 2000° K) aufgeheizt wird, bei der die thermische Emission von Elektronen einsetzt.

Nach Ablauf des dritten vorgebbaren Zeitraums T3, also zu Beginn von T4 wird nunmehr der Lampe der Strom bzw. die Spannung mit der Nennfrequenz, beispielsweise 90-150 Hz, eingeprägt.

Es kann vorgesehen sein, daß der dritte vorgebbare Zeitraum T3 kürzer als der zweite vorgebbare Zeitraum T2 ist. Der Lampenstrom kann während des zweiten und/oder dritten Zeitraums T2, T3 höher als der anschließend im Zeitraum T4 gebildete Lampenstrom sein. Insbesondere ist der Lampenstrom während der zeiträume T2, T3 mindestens um den Faktor 1,5 höher als der anschließend gebildete Lampenstrom.

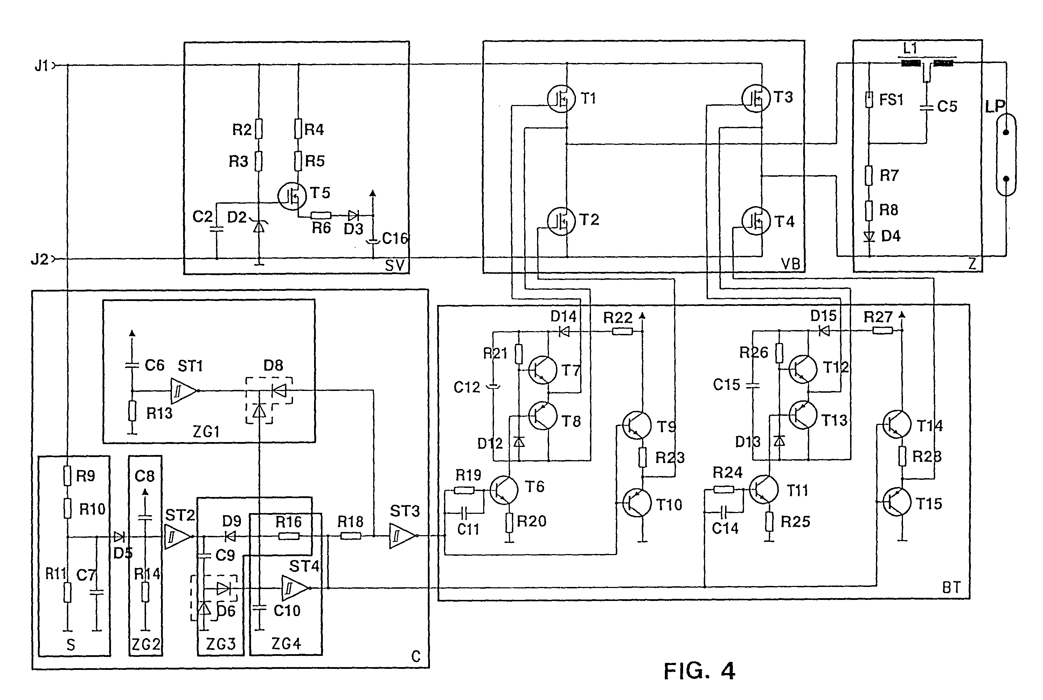

Die in Fig. 4 dargestellte Schaltung stellt ein Beispiel für eine Schaltungsanordnung zur Durchführung des erfindungsgemäßen Verfahrens dar, die einen Teil eines elektronischen Vorschaltgeräts bildet. Diese Schaltungsanordnung gliedert sich in die folgenden Blöcke: Spannungsversorgung SV, Vollbrücke VB, Brückentreiber BT, Zündung Z, und Steuerungsteil C. Die vier erstgenannten Blöcke SV, VB, BT und Z können identisch wie entsprechende Blöcke in herkömmlichen Schaltungsanordnungen aufgebaut sein.

Erfindungsgemäß weist die Schaltungsanordnung ein Steuerungsteil auf, das beispielsweise wie die in Figur 4 dargestellte Anordnung C aufgebaut sein kann.
Das Steuerungsteil C weist einen Sensor S sowie Zeitglieder ZG1, ZG2, ZG3 und ZG4 auf, wobei der Sensor S dem Zeitglied ZG2, das den Zeitraum T2 bildet, unmittelbar vorgeschaltet ist.

Der Sensor S dient zur Erkennung des Betrags der Lampenspannung und besteht aus Widerständen R9, R10 und R11 und aus einer Kapazität C7. Die über den Spannungsteiler R9, R10, R11 abgegriffene Lampenspannung wird über eine Diode D5 dem Zeitglied ZG2 zugeführt, dessen schaltungstechnischer Aufbau und Funktionsweise noch beschrieben werden.

Das Zeitglied ZG1 besteht aus einem Kondensator C6, einem Widerstand R13, zwei Dioden (in dem gestrichelt gezeichneten Block) D8 und einem Schmitt-Trigger ST1. Es dient zur Initialisierung des Brückentreibers BT, die wie folgt abläuft:
Vor dem Einschalten der Betriebsspannung ist der Kondensator C6 entladen (0 Volt). Der Ausgang des Schmitt-Triggers ST1 liegt auf 0 Volt. Über die Dioden in dem gestrichelt gezeichneten Block D8 sowie über einen Schmitt-Trigger ST3, der dem Zeitglied ZG1 nachgeschaltet ist, und einen Schmitt-Trigger ST4 (im Zeitglied ZG4) schaltet der Brückentreiber BT die Leistungstransistoren T2 und T4 der Vollbrücke VB ein.

Nach Ablauf der Zeitkonstanten, die durch das RC-Glied R13, C6 bestimmt ist, schaltet der Schmitt-Trigger ST1 an seinem Ausgang von 0 Volt auf 15 Volt. Der Leistungstransistor T2 wird ausgeschaltet und der Leistungstransistor T1 wird eingeschaltet.
Die am Eingang der Vollbrücke liegende Spannung wird an den Ausgang der Vollbrücke VB durchgeschaltet. Damit wird die Zündung in der Entladungslampe LP freigegeben.

Das Zeitglied ZG2 weist einen Kondensator C8 und einen Widerstand R14 auf. Nach dem Zünden der Lampe (Ende des Zeitraums T1 bzw. Beginn des Zeitraums T2 in Figuren 2 und 3) sinkt die Spannung am Spannungsteiler des Sensors S und an der Anode von D5 von z.B. 15 Volt auf 1 Volt. Die Diode D5 sperrt. Das Potential an der Kathode von D5 sinkt von 15 Volt nach einer e-Funktion mit der Zeitkonstanten von C8 und R14 ab. Beim Unterschreiten einer Schwellspannung eines Schmitt-Triggers ST2, der zwischen den Zeitgliedern ZG2 und ZG3 angeordnet ist, schaltet dieser an seinem Ausgang von 0 Volt auf 15 Volt. Der Schmitt-Trigger ST4 schaltet an seinem Eingang von 0 Volt auf 15 Volt und an seinem Ausgang von 15 Volt auf 0 Volt.

Der nachgeschaltete Schmitt-Trigger ST3 schaltet an seinem Eingang von 15 Volt auf 0 Volt und an seinem Ausgang von 0 Volt auf 15 Volt.
Damit wird die Vollbrücke VB umgeschaltet (Transistoren T1 und T4 von "EIN" auf "AUS "; sowie Transistoren T2 und T3 von 'AUS" auf "EIN") und der Zeitraum T2 wird beendet. Der Zeitraum T2 ist so bemessen, daß die während dieses Zeitraums als Anode fungierende Elektrode der Entladungslampe ihre Emissionstemperatur erreicht. Typischerweise beträgt der Zeitraum T2 500 Millisekunden.

Mit dem oben genannten Umschalten des Schnitt-Triggers ST2 wird das Zeitglied ZG3 gestartet. Dieses besteht aus einem Kondensator C9, zwei Dioden (im gestrichelt gezeichneten Block D6) und einem Widerstand R16. Der Kondensator C9 lädt sich über R16 auf 15 Volt auf.

Wird am Eingang des Schmitt-Triggers ST4 die Schwellspannung unterschritten, schaltet dieser an seinem Ausgang von 0 Volt auf 15 Volt, während der Schmitt-Trigger ST3 an seinem Ausgang von 15 Volt auf 0 Volt schaltet. Die Brücke VB wird wieder umgeschaltet. Damit ist der Zeitraum T3 beendet. Er ist so bemessen, daß die während dieses Zeitraums als Anode fungierende Elektrode der Entladungslampe LP ihre Emissionstemperatur erreicht. Der Zeitraum T3 ist typischerweise kürzer als der Zeitraum T2 und beträgt z.B. 200 ms.

In dem T3 anschließenden Zeitraum T4 wird über das Zeitglied ZG4, das einen Oszillator C10, R16 und ST4 aufweist, die Nennfrequenz durch diesen Oszilator erzeugt. Der Entladungslampe LP wird der Wechselstrom mit der Nennfrequenz zugeführt. Die Signale des Oszilators ZG4 werden mit Hilfe des Brückentreibers BT an die Vollbrücke VB geführt und diese schaltet die Eingangsspannung U_{E} mit der Nennfrequenz an die Lampe. Der Nennbetriebszustand der Lampe wird dann nach etwa 1-2 Minuten erreicht.

## Patentansprüche

1. Verfahren zum Betrieb einer Entladungslampe (LP), insbesondere einer Hochdruckentladungslampe wobei der Hochdruckentladungslampe in einem Anlaufbetriebszeitraum (Ta) ein Wechselstrom eingeprägt wird,
dadurch gekennzeichnet,
daß der Entladungslampe vor Zufuhr der Wechselspannung in einem ersten Zeitraum (T1) eine Gleichspannung zugeführt wird, der Zündimpulse überlagert werden,
daß die Entladungslampe nach Bildung eines Lampenstroms während eines zweiten vorgebbaren Zeitraums (T2) mit einem Gleichstrom (I2) in einer ersten Richtung betrieben wird,
daß die Entladungslampe im Anschluß an den zweiten Zeitraum (T2) während eines dritten vorgebbaren Zeitraums (T3) mit dem Gleichstrom (I3) in der der ersten Richtung entgegengesetzten Richtung betrieben wird, und
daß der Entladungslampe im Anschluß an den dritten Zeitraum der Wechselstrom eingeprägt wird.

2. Verfahren zum Betrieb einer Entladungslampe nach Anspruch 1, dadurch gekennzeichnet, daß in dem zweiten vorgebbaren Zeitraum (T2) die während dieses Zeitraums als Anode fungierende Elektrode der Entladungslampe ihre Emissionstemperatur erreicht.

3. Verfahren zum Betrieb einer Entladungslampe nach Anspruch 1 oder 2, dadurch gekennzeichnet, daß in dem dritten vorgebbaren Zeitraum (T3) die während dieses Zeitraums als Anode fungierende Elektrode der Entladungslampe ihre Emissionstemperatur erreicht.

4. Verfahren zum Betrieb einer Entladungslampe nach einem der vorstehenden Ansprüche, dadurch gekennzeichnet, daß der dritte vorgebbare Zeitraum (T3) kürzer als der zweite vorgebbare Zeitraum (T2) ist.

5. Verfahren zum Betrieb einer Entladungslampe nach einem der vorstehenden Ansprüche, dadurch gekennzeichnet, daß der Lampenstrom in dem Anlaufbetriebszeitraum (Ta) höher als der anschließend gebildete Lampenstrom ist.

6. Verfahren zum Betrieb einer Entladungslampe nach Anspruch 5, dadurch gekennzeichnet, daß der Lampenstrom in dem Anlautbetriebszustand mindestens um den Faktor 1,5 höher als der anschließend gebildete Lampenstrom ist.

7. Schaltungsanordnung nach einem der vorstehenden Ansprüche, dadurch gekennzeichnet, daß die Schaltungsanordnung mindestens ein Zeitglied (ZG2, ZG3) zur Realisierung des zweiten und/oder dritten vorgebbaren Zeitraums aufweist.

8. Schaltungsanordnung nach Anspruch 8, dadurch gekennzeichnet, daß die Schaltungsanordnung einen Sensor (S) aufweist, der den Betrag der Lampenspannung erkennt.

9. Schaltungsanordnung nach Anspruch 7 und 8, dadurch gekennzeichnet, daß der Sensor (S) dem mindestens einen Zeitglied (ZG2, ZG3) vorgeschaltet ist.

## Claims

1. Method for operating a discharge lamp (LP), in particular a high-pressure discharge lamp, an alternating current being applied to the high-pressure discharge lamp in an operational warm-up time (Ta), characterized in that before the feeding of the AC voltage the discharge lamp is fed in a first time period (T1) a DC voltage on which starting pulses are superimposed, in that after formation of a lamp current the discharge lamp is operated during a second prescribable time period (T2) by a direct current (I2) in a first direction, in that following the second time period (T2) the discharge lamp is operated during a third prescribable time period (T3) by the direct current (13) in the direction opposite to the first direction, and in that the alternating current is applied to the discharge lamp following the third time period.

2. Method for operating a discharge lamp according to Claim 1, characterized in that the electrode of the discharge lamp, which functions as an anode during the second prescribable time period (T2), reaches its emission temperature in this time period.

3. Method for operating a discharge lamp according to Claim 1 or 2, characterized in that the electrode of the discharge lamp functioning as an anode during the third prescribable time period (T3) reaches its emission temperature in this time period.

4. Method for operating a discharge lamp according to one of the preceding claims, characterized in that the third prescribable time period (T3) is shorter than the second prescribable time period (T2).

5. Method for operating a discharge lamp according to one of the preceding claims, characterized in that the lamp current in the operational warm-up time (Ta) is higher than the subsequently formed lamp current.

6. Method for operating a discharge lamp according to Claim 5, characterized in that in the operational warm-up state the lamp current is higher at least by the factor 1.5 than the subsequently formed lamp current.

7. Circuit arrangement according to one of the preceding claims, characterized in that the circuit arrangement has at least one timing element (ZG2, ZG3) for realising the second and/or third prescribable time period.

8. Circuit arrangement according to Claim 8, characterized in that the circuit arrangement has a sensor (S) which detects the absolute value of the lamp voltage.

9. Circuit arrangement according to Claims 7 and 8, characterized in that the sensor (S) is connected upstream of the at least one timing element (ZG2, ZG3).

## Revendications

1. Procédé d'alimentation d'une lampe (LP) à décharge, notamment d'une lampe à décharge haute pression, un courant alternatif étant appliqué à la lampe à décharge haute pression dans un laps de temps (Ta) de fonctionnement en démarrage,
caractérisé en ce qu'il consiste
à appliquer à la lampe à décharge, avant l'application de la tension alternative, dans un premier laps de temps (T1) une tension continue à laquelle sont superposées des impulsions d'allumage,
à alimenter la lampe à décharge, après formation d'un courant de lampe, pendant un deuxième laps de temps (T2) qui peut être prescrit en un courant (I2) continu dans un premier sens,
à alimenter la lampe à décharge, à la suite du deuxième laps de temps (T2), pendant un troisième laps de temps (T3) qui peut être prescrit en le courant continu (13) de sens opposé au premier sens et
à appliquer à la lampe à décharge, à la suite du troisième laps de temps, le courant alternatif.

2. Procédé d'alimentation d'une lampe à décharge suivant la revendication 1, caractérisé en ce que dans le deuxième laps de temps (T2) pouvant être prescrit, l'électrode de la lampe à décharge, qui fonctionne en anode pendant ce laps de temps, atteint sa température d'émission.

3. Procédé d'alimentation d'une lampe à décharge suivant la revendication 1 ou 2, caractérisé en ce que dans le troisième laps de temps (T3) qui peut être prescrit, l'électrode de la lampe à décharge, qui fonctionne en anode pendant ce laps de temps, atteint sa température d'émission.

4. Procédé d'alimentation d'une lampe à décharge suivant l'une des revendications précédentes, caractérisé en ce que le troisième laps de temps (T3) qui peut être prescrit est plus court que le deuxième laps de temps (T2) qui peut être prescrit.

5. Procédé d'alimentation d'une lampe à décharge suivant l'une des revendications précédentes, caractérisé en ce que le courant de lampe dans le laps de temps (Ta) de fonctionnement en démarrage est plus intense que le courant de lampe formé ensuite.

6. Procédé d'alimentation d'une lampe à décharge suivant la revendication 5, caractérisé en ce que le courant de lampe dans l'état de fonctionnement en démarrage est plus intense du facteur 1,5 que le courant de lampe formé ensuite.

7. Circuit suivant l'une des revendications précédentes,
caractérisé en ce que le circuit comprend au moins un organe de temporisation (ZG2, ZG3) destiné à la réalisation du deuxième et/ou du troisième laps de temps qui peut être prescrit.

8. Circuit suivant la revendication 7, caractérisé en ce que le circuit comporte un capteur (S) qui reconnaît la valeur absolue de la tension de la lampe.

9. Circuit suivant la revendication 7 ou 8, caractérisé en ce que le capteur (S) est monté en amont d'au moins un organe de temporisation (ZG2, ZG3).
